# EUROPEAN PATENT APPLICATION

(11) **EP 1 816 512 A1**
(43) Date of publication of application: **08.08.2007**
(21) Application number: 05805331.5
(22) Date of filing: 27.10.2005
(51) Int. Cl.: G03B 21/00, G03B 21/14

(54) **OPTICAL INTEGRATOR, ILLUMINATOR, AND PROJECTION IMAGE DISPLAY**

(30) Priority: 29.10.2004 JP 2004316940
(71) Applicant: SHARP KABUSHIKI KAISHA, Osaka-shi, Osaka 545-8522 (JP)
(72) Inventor: KYOMOTO, Tadao, Matsudo-shi, Chiba 271-0062 (JP); IWAUCHI, Kenichi, Matsudo-shi, Chiba 270-0004 (JP)
(74) Representative: Müller, Frithjof E.
(86) International application number: PCT/JP2005/019805
(87) International publication number: WO 2006/046654

(57) **Abstract**

Reduction in the length of the light path for light emitted from the light source and increase in the efficiency of the light source when being used are achieved, and the unit is reduced in size and the cost is lowered.

In a projection type image display 50, LED's 51R, 51G and 51B are used as the light source so that the emitted light beam enters into an optical integrator 60. The optical integrator 60 is formed of four block materials 61 to 64 which are joined in the longitudinal direction, and a dichroic mirror 65R which reflects R light beams and transmits G and B light beams, a dichroic mirror 65G which reflects G light beams and transmits R and B light beams, and a dichroic mirror 65B which reflects B light beams and transmits R and G light beams are provided so as to be integrated with the joined surfaces which are inclined between the respective block materials 61 to 64. Each dichroic mirror 65R, 65G and 65B reflects light emitted from the respective LED's 51R, 51G and 51B and allows the light to be totally reflected and progress through the optical integrator 60, and thus, a uniform light beam is emitted from an emission surface 60b.

## Description

### [Technical Field]

The present invention relates to an optical integrator and an illuminator which makes highly efficient use of a light source, as well as a projection type image display of which the size can be reduced and which implements high quality image display.

### [Background Technology]

There are conventional front projection type projectors (projection type image displays) for displaying images on a screen which project modulated light for images generated by a light source onto a screen. In addition, the configuration of such projection type image displays is applied to rear projection type displays, such as rear projection TV's. Projection type image displays include those using a lamp as the light source, as well as those using light emitting elements, such as lasers or diodes. Meanwhile, if categorized by the type of spatial light modulator (light bulb) for generating original images which are an object to be projected, they can be divided into those using a DMD (Digital Mirror Device; registered trademark) and those using a display panel, such as of liquid crystal.

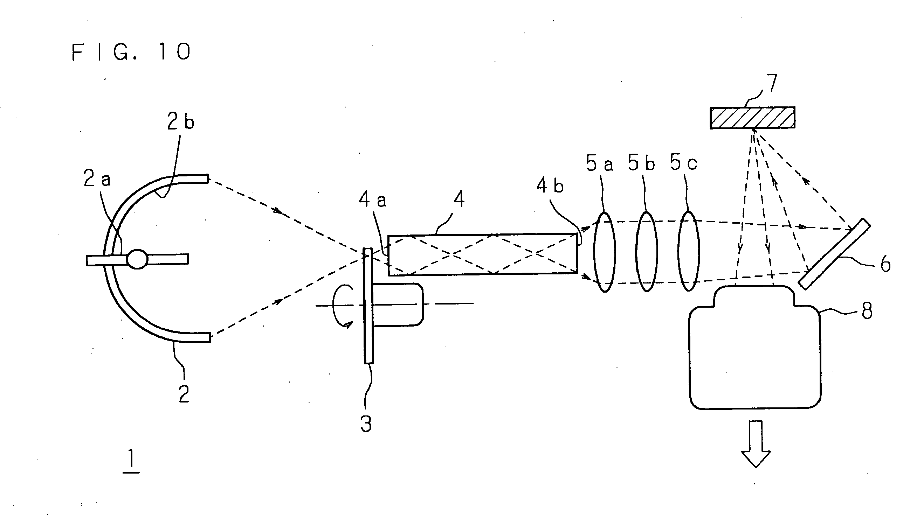

FIG 10 is a schematic diagram showing the configuration of a conventional projection type image display 1 (DLP (digital light projector) type), where a lamp is used as the light source and a DMD is used as the light bulb. In the projection type image display 1, a color wheel 3 is placed so as to face a lamp 2, which is the light source, and a rod integrator 4, three sets of condenser lenses 5a to 5c in total and a mirror 6 are placed on the side downstream from the color wheel 3 in the direction in which the light beam emitted from the lamp 2 progresses, so that the light beam is reflected from the mirror 6 so as to be directed toward the DMD 7, and modulated light for an image generated by the DMD 7 is projected from a projection lens 8. Here, in the following description, the direction opposite to the direction in which the light beam progresses in the light path is referred to as upstream, and the direction in which the light beam progresses is referred to as downstream.

A halogen lamp having a filament type electrode structure, a metal halide lamp having an electrode structure for generating arc discharge, a xenon short arc lamp or a high voltage type mercury lamp can be used as the lamp 2, and the light beam emitted from a luminous tube 2a, which is provided at the center of the lamp 2, is reflected from a reflector (reflective mirror) 2b, which is formed mainly of a glass base so as to have an elliptical surface or a hyperbolic surface, and progresses so as to be directed in a desired direction and illuminate a desired area. Here, the light beam emitted from the lamp 2 includes ultraviolet rays, visible light and infrared rays, and thus, is a white light beam to the eye. In addition, a color wheel 3 is placed in the vicinity of the focal point of the emitted light beam.

The color wheel 3 is divided into three segments where a dichroic mirror for transmitting at least red, green and blue light beams is formed. Here, the rotation of the color wheel 3 is controlled in a control portion, not shown.

The rod integrator 4, which is placed on the downstream side of the color wheel 3, is formed mainly of a glass base in columnar form, and allows a group of light beams that have entered through one end surface (entrance surface) 4a with desired spread angles to propagate highly efficiently inside the glass base while repeating total reflection from the interface inside the glass base due to the difference in the index of refraction between the glass base and the surrounding air. As a result, multiply reflected images of the light source are formed while the incident angles of the group of light beams are maintained on the other end surface (emission surface 4b) of the rod integrator, and illumination of the emission surface 4b is made uniform. Here, it is possible to place the rod integrator 4 on the upstream side of the color wheel 3. In addition, the DMD 7 is formed of an element where an image is generated through control of a moveable mirror array in the microns.

Next, the projection control of the projection type image display 1 is described. The control portion, not shown, carries out phase rotation control of the color wheel 3 using a synchronous signal of the DMD 7, and as a result of this control, the color wheel 3 rotates, so that the light beam emitted from the lamp 2 passes through the red segment of the color wheel 3 during the time segment when red image data is inputted into the DMD 7, for example.

Therefore, the light beam emitted from the lamp 2 is converted to a red (hereinafter referred to as R) light beam, a green (hereinafter referred to as G) light beam and a blue (hereinafter referred to as B) light beam in sequence when passing through the color wheel 3, and in sync with this, the DMD 7 also forms images for R, G and B in sequence, and therefore, R, G and B light beams enter into and are emitted from the DMD 27, and thus, light beams for R, G and B images are generated in sequence. These light beams for the R, G and B images are projected from the projection lens 8 onto a screen (not shown), and thus, R, G and B images are displayed on the screen. Here, the R, G and B images displayed on the screen are separately switched at a rate of no lower than 180 Hz, which is no lower than the color resolution that can be discerned by humans, and thus, are perceived as a color image, as a result of optical illusion.

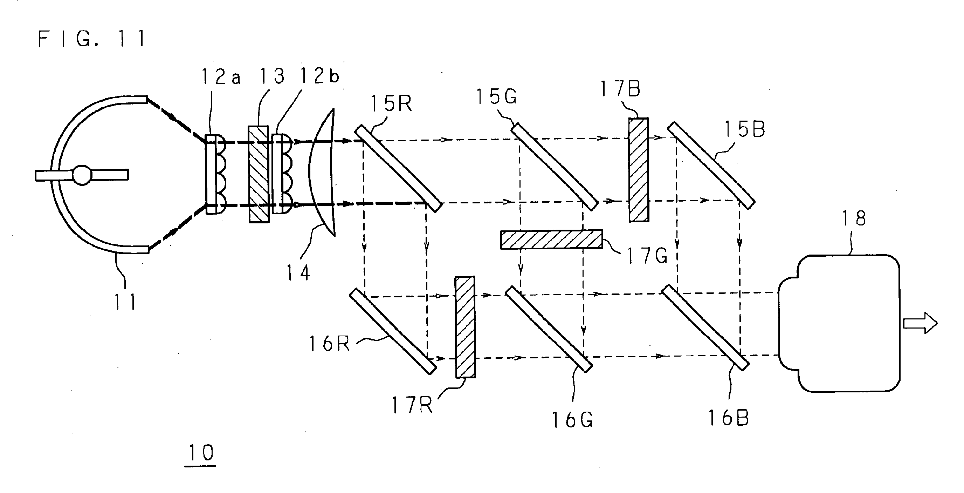

FIG. 11 is a schematic diagram showing the configuration of a conventional projection type image display 10 (LCD (liquid crystal display) type) where a lamp is used as the light source and liquid crystal panels are used as the light bulb. These days, projection type image displays where three liquid crystal panels 17R, 17B and 17G are used in order to secure brightness on the screen are the mainstream of LCD's.

In the projection type image display 10, a first fly eye lens 12a, a PS separation and synthesis unit 13, a second fly eye lens 12b and a lens 14 are placed so as to face a lamp 11 having a reflector in elliptical or parabolic form, and in addition, a total of six dichroic mirrors 15R, 15G, 15B, 16R, 16G and 16B are placed on the downstream side of the lens 14, and at the same time, a liquid crystal panel for red 17R, a liquid crystal panel for green 17G and a liquid crystal panel for blue 17B are placed in appropriate locations between the respective dichroic mirrors 15R, 15G ....

The first and second fly eye lenses 12a and 12b make the unevenness in illumination by the lamp 11, which is the light source, uniform through multiple images. In addition, the PS separation and synthesis unit 13 separates the light beam emitted from the lamp 11 into a polarization component in the longitudinal direction relative to the optical axis (P waves) and a polarization component in the lateral direction relative to the optical axis (S waves), converts one polarization component to the other polarization component, and then synthesizes them. The function of this PS separation and synthesis unit 13 is matched with the transmission axis of the polarization boards for controlling the transmission absorption by the respective liquid crystal panels 17R, 17G and 17B in design, and thus, the efficiency of the light source when used increases.

The respective dichroic mirrors 15R, 15G ... are provided with such properties as to selectively reflect or transmit R, G and B light beams emitted from the lamp 11, respectively. Concretely, the dichroic mirrors 15R and 16R reflect R light beams while transmitting G and B light beams, the dichroic mirrors 15G and 16G reflect G light beams while transmitting R and B light beams, and the dichroic mirrors 15B and 16B reflect B light beams while transmitting R and G light beams.

Therefore, R light beams, from among the R, G and B light beams which pass through the lens 14, are reflected from the dichroic mirrors 15R and 16R in sequence, and thus, enter into the liquid crystal panel for red 17R and form an R image, and after that, the light beams for the R image transmit through the dichroic mirrors 16G and 16B, respectively, so as to be directed toward the projection lens 18. In addition, G light beams which have passed through the lens 14 transmit through the dichroic mirror 15R and then are reflected from the dichroic mirror 15G, and thus, enter into the liquid crystal panel for green 17G and form a G image, and after that, the light beams for the G image are reflected from the dichroic mirror 16G and then transmit through the dichroic mirror 16B so as to be directed toward the projection lens 18. Furthermore, B light beams which have passed through the lens 14 transmit through the dichroic mirrors 15R and 15G in sequence, and thus, enter into the liquid crystal panel for blue 17B and form a B image, and after that, the light beams for the B image are reflected from the dichroic mirrors 15B and 16B in sequence so as to be directed toward the projection lens 18.

As a result of the above described reflection and transmission, the R, G and B images are formed so as to coincide in the entrance portion (entrance pupil) of the projection lens 18, so that the light beams for these R, G and B images are simultaneously projected onto a screen and focused, and thus, a color image is formed and displayed. Here, two dichroic mirrors 15B and 16R from among the dichroic mirrors 15R, 15G ... do not transmit light beams, and therefore, it is possible to replace them with mirrors solely for reflection.

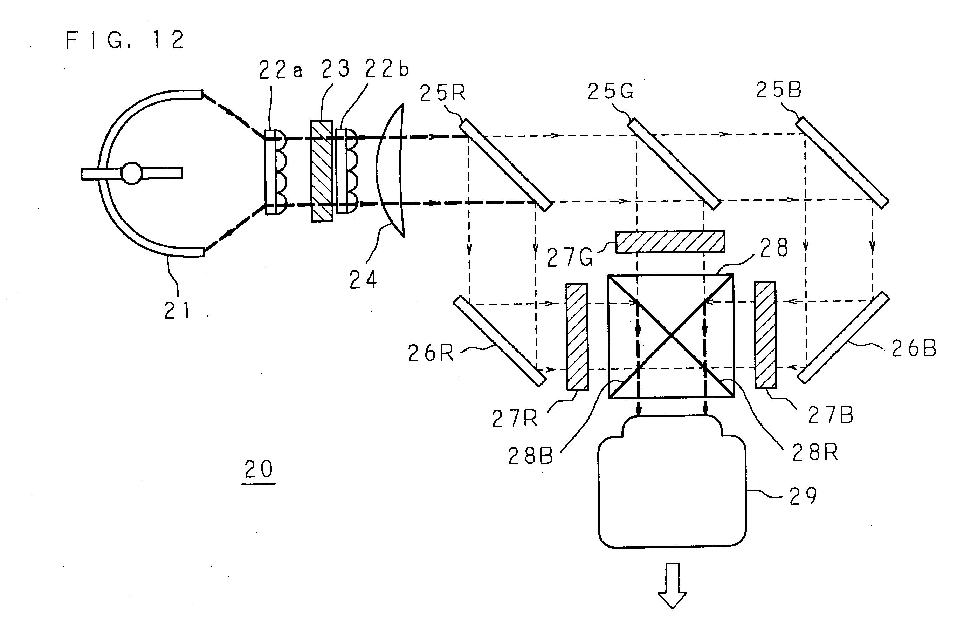

In addition, FIG. 12 is a schematic diagram showing the configuration of an LCD projection type image display 20 where a cross prism 28, which is an integrated prism functioning as two dichroic mirrors, is used. In the projection type image display 20, a lamp 21, a first fly eye lens 22a, a PS separation and synthesis unit 23, a second fly eye lens 22b and a lens 24 are placed in the same manner as in the projection type image display 10 of FIG. 11, a total of five dichroic mirrors 25R, 25G, 25B, 26R and 26B are placed on the side downstream from the lens 24, and at the same time, the cross prism 28 is placed between the two dichroic mirrors 26R and 26B, and then, a liquid crystal panel for red 27R, a liquid crystal panel for green 27G and a liquid crystal panel for blue 27B are placed around this.

The cross prism 28 is in rectangular parallelepiped form and provided with a diagonal dichroic mirror 28R which reflects R light beams while transmitting G and B light beams, and a diagonal dichroic mirror 28B which reflects B light beams while transmitting R and G light beams. Here, the respective dichroic mirrors 28R and 28B are formed of prism members which are pasted together and integrally form a cross prism 28.

R light beams, from among the R, G and B light beams which pass through the lens 24, are reflected from the dichroic mirrors 25R and 26R, respectively, so as to enter into the liquid crystal panel for red 27R and form an R image, and after that, the light beams for the R image are reflected from the dichroic mirror 28R within the cross prism 28 (here, part of the light beams for the R image transmit through the dichroic mirror 28B) so as to be directed toward the projection lens 29. In addition, G light beams which pass through the lens 24 transmit through the dichroic mirror 25R and then are reflected from the dichroic mirror 25G, and thus, enter into the liquid crystal panel for green 27G and form a G image, and after that, the light beams for the G image transmit through the respective dichroic mirrors 28R and 28B within the cross prism 28 so as to be directed toward the projection lens 29. Furthermore, B light beams which pass through the lens 24 transmit through the dichroic mirrors 25R and 25G in sequence, and at the same time, are reflected from the dichroic mirrors 25B and 26B in sequence, and thus, enter into the liquid crystal panel for blue 27B and form a B image, and after that, the light beams for the B image are reflected from the dichroic mirror 28B within the cross prism 28 (here, part of the light beams for the B image transmit through the dichroic mirror 28R) so as to be directed to the projection lens 29.

In the projection type image display 20, a cross prism 28 is used and the length of the light path from the respective liquid crystal panels 27R, 27G and 27B to the projection lens 29 is kept to the minimum, and thus, spreading of images (light beams) is kept to the minimum, and therefore, the projection lens 29 can be reduced in size, and at the same time, the unit as a whole can be reduced in size. Here, three dichroic mirrors 25B, 26R and 26B from among the dichroic mirrors 25R, 25G ... do not transmit light beams, and therefore, can be replaced with mirrors solely for reflection.

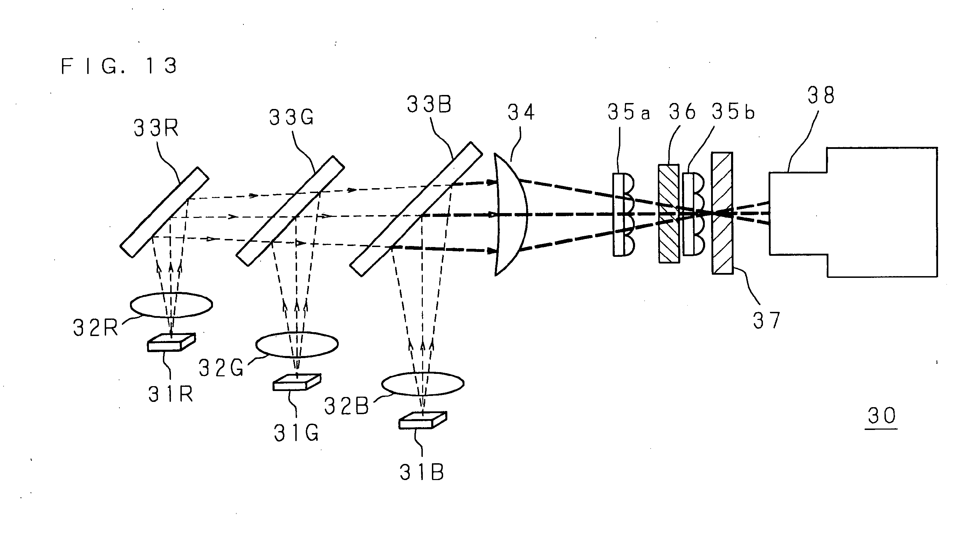

FIG. 13 is a schematic diagram showing the configuration of a single LCD projection type image display 30 where light emitting elements are used as the light source and one liquid crystal panel is used as the light bulb. It is possible to use solid semiconductor light emitting elements, such as lasers, laser diodes or light emitting diodes (LED's), which are safe for the eyes, as the light emitting elements.

In the projection type image display 30, lenses 32R, 32G and 32B for controlling the spread angle of light emitted from each of a red LED 31R which emits R light beams, a green LED 31G which emits G light beams, and a blue LED 31B which emits B light beams are placed so as to face the LED's 31R, 31G and 31B, respectively, and at the same time, dichroic mirrors 33R, 33G and 33B are placed so that light beams which pass through the lenses 32R, 32G and 32B enter. In addition, a lens 34, a first fly eye lens 35a, a PS separation and synthesis unit 36, a second fly eye lens 35b, a liquid crystal panel 37 and a projection lens 38 are respectively placed on the side downstream from the dichroic mirrors 33R, 33G and 33B.

In the projection type image display 30, light emitted from each LED 31R, 31G and 31B forms an image on the liquid crystal panel 37 or in the vicinity thereof, and therefore, the length of the light path from each LED 31R, 31G and 31B to the liquid crystal panel 37 is the same. Therefore, the respective LED's 31R, 31G and 31B are placed so that the distance between the blue LED 31B and the dichroic mirror 33B is the longest, the distance between the green LED 31G and the dichroic mirror 33G is the second longest, and the distance between the red LED 31R and the dichroic mirror 33R is the shortest, and at the same time, the dichroic mirrors 33R, 33G and 33B are different in size.

In the projection type image display 30, light emitted from each LED 31R, 31G and 31B forms an image on the liquid crystal panel 37 or in the vicinity thereof, and therefore, unevenness in light emitted from each LED 31R, 31G and 31B does not change and directly leads to unevenness in illumination. Therefore, in the projection type image display 30, the PS separation and synthesis unit 36, which is located on the side upstream from the liquid crystal panel 37, is sandwiched between the first and second fly eye lenses 35a and 35b, so that LED light (LED images) multiply combines on the liquid crystal panel 37, and thus, unevenness in illumination is reduced and the system is improved. Here, it is possible to place the PS separation and synthesis unit 36, as well as the first and second fly eye lenses 35a and 35b on the side upstream from the dichroic mirrors 33R, 33G and 33B.

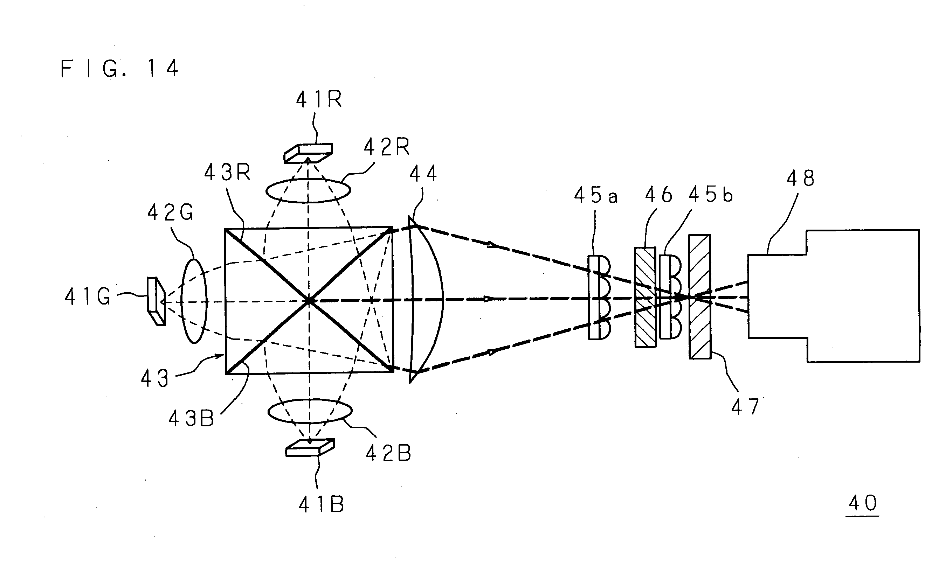

FIG. 14 is a schematic diagram showing the configuration of a projection type image display 40 of a single LCD type using LED's as the light source, where a cross prism 43 is used. In the projection type image display 40, red, green and blue LED's 41R, 41G and 41B are placed around the cross prism 43 in cubic form, so as to face three surfaces thereof, and at the same time, lenses 42R, 42G and 42B are placed between each LED 41R, 41G and 41B and the cross prism 43, and furthermore, a lens 44, a first fly eye lens 45a, a PS separation and synthesis unit 46, a second fly eye lens 45B, a liquid crystal panel 47 and a projection lens 48 are respectively placed on the side downstream from the cross prism 43.

In the projection type image display 40, the respective LED's 41R, 41G and 41B are placed around the cross prism 43 at the same distance, so that light emitted from each LED 41R, 41G and 41B forms an image on the liquid crystal panel 47. As a result, the length of the light path from each LED 41R, 41G and 41B to the liquid crystal panel 38 becomes the same, and at the same time, the length of the light path can be kept to the shortest in the design, and therefore, it becomes possible to keep the space occupied by the optical system for the illuminator, which is formed of the respective LED's 41R, 41G and 41B, the lenses 42R, 42G and 42B, and the cross prism 43 small.

Here, light emitted from the respective LED's 41R, 41G and 41B simply enters into the cross prism 43, in which dichroic mirrors 43R and 43B are provided, and therefore, it is not necessary to control the position of the light beams for the R, G and B images which have passed through the liquid crystal panels 27R, 27G and 27B, respectively using the pixel unit, unlike in the projection type image display 20 shown in FIG. 12. Therefore, in the cross prism 43, the level of precision for pasting as concerns the surface where dichroic mirrors 43R and 43B are formed can be lowered, in comparison with in the cross prism 28 shown in FIG. 12, and thus, there is an advantage in terms of the yield.

In addition, conventional projection type image displays other than those above are disclosed in the respective patent documents described below.
[Patent Document 1] Japanese Patent Application Laid Open No.2001-92419
[Patent Document 2] Japanese Patent Application Laid Open No.H8 (1996)-76078
[Patent Document 3] Japanese Patent Application Laid Open No.2002-244211
[Patent Document 4] Japanese Patent Application Laid Open No.2003-186110
[Patent Document 5] Japanese Patent Application Laid Open No.H9 (1997)-197340

### [Disclosure of the Invention]

### [Problem to Be Solved by the Invention]

Projection type image displays of the type shown in FIGS. 10, 11 and 12 have a lamp type illuminator where a metal halide lamp, a xenon short arc lamp or a high voltage type mercury lamp is used as the light source, and therefore, has the problems described below.

First, the wavelength range of light emitted from the lamp includes ultraviolet rays and infrared rays, and therefore, a problem arises, such that the light bulb (DMD or liquid crystal panel) and other parts are subjected to the effects of heat. In addition, it becomes necessary to provide a cooling fan inside the unit, in order to avoid the effects of heat, or an ultraviolet ray and infrared ray cutting filter in the emission portion of the lamp, and thus, the cost of the unit increases and a big noise is generated by the fan during operation of the unit, and furthermore, this leads to increase in the size and weight of the unit. Moreover, in the case of a lamp type, the image displayed on the screen becomes dark when the life of the lamp expires, after lighting of 2,000 hours to 4,000 hours, and thus, the lamp must be replaced, which is expensive.

In addition, in DLP type units as that shown in FIG. 10, sound is generated during operation of the motor for rotating the color wheel and when parts of the motor slice air, and in addition, sound is also generated during operation of the fan motor and when the blades of the fan slice air, and therefore, a problem arises, such the total sound becomes large during operation of the unit.

Furthermore, in LCD type units as those shown in FIGS. 11 and 12, the lamp is a white light source, and therefore, it becomes necessary to provide dichroic mirrors, in order to separate colors in the emitted light, and in addition, the light emitted from the lamp has a spread angle, and therefore, the further downstream of the light path the dichroic mirrors used are placed, the larger they must be, and a problem arises, such that the unit becomes large as a whole.

Moreover, the projection type image display 20 using a cross prism 28 shown in FIG. 12 has a such a configuration that the light beams for R, G and B images generated by each liquid crystal panel 27R, 27G and 27B enter the cross prism 28, and therefore, a problem arises, such that each liquid crystal panel 27R, 27G and 27B must be placed with extremely high precision relative to the entrance surface of the cross prism 28. In addition, for the same reason, high precision is required when pasting the dichroic mirrors 28R and 28B for the manufacture of the cross prism 28, and thus, a problem arises, such that the yield of the cross prism 28 lowers and the cost increases.

Next, there are the following problems with types where solid semiconductor light emitting elements are used as the light source, as those shown in FIGS. 13 and 14. That is to say, in the case where dichroic mirrors 33R, 33G and 33B are used, as shown in FIG. 13, the further downstream the dichroic mirrors used are placed, the larger they need to be in size, and at the same time, it is necessary to adjust the length of the light path from each LED 31R, 31G and 31B to the liquid crystal panel 37 so that it is the same, and therefore, a problem arises, such that the width or the height becomes great, in terms of the dimensions of the unit housing. In addition, in the case where a cross prism 43 is used, as shown in FIG. 14, it becomes difficult to lower the cost of the projection type image display, because cross prisms are generally expensive, and furthermore, the spread angle of the light emitted from each LED 41R, 41G and 41B in some cases requires use of a large and heavy cross prism 43.

Furthermore, in terms of the magnification of the image, there is also a problem shared by the two image displays of the type shown in FIGS. 13 and 14, such that all of the light emitted from the respective LED's 31R, 41R and the like cannot be effectively used, in the case where the form of the respective LED's 31R, 41R and the like and the form of the opening in the liquid crystal panel 37 or 47 are different. In addition, it is necessary to use high power LED's having a high output as the light source, in order to gain strong illumination on the screen, and in this case, the dichroic mirrors 33R, 33G and the like or the cross prism 43 cannot be placed in one plane in order to deal with heat released from the high power LED's, and thus, a problem arises, such that the structure for heat release becomes complicated and the unit further increases in size.

The present invention is provided in view of these problems, and an object thereof is to provide an optical integrator, an illuminator and a projection type image display where the configuration for changing the light path of light emitted from the light source and making illumination uniform is integrated, and thus, reduction in the number of parts, shortening of the length of the light path and increase in the efficiency when using the light source can be achieved.
Another object of the present invention is to provide an illuminator and a projection type image display where the structure of the packages for LED's, which are the light source, and the design for heat release are simplified, and thus, reduction in size and cost can be achieved.
Still another object of the present invention is to provide a projection type image display which can display a projected image with strong illumination by increasing the efficiency when using the light source.

### [Means for Solving Problem]

In order to solve the above described problems, the optical integrator according to the present invention is an optical integrator which is formed of a light transmitting member in columnar form, reflects light that enters inside so that illumination becomes uniform and emits the light, characterized in that the above described light transmitting member is formed of a number of block materials joined in a longitudinal direction, the joined surfaces of the above described number of block materials are inclined relative to the longitudinal direction, and the above described joined surfaces are provided with an optical film having such properties that light in one wavelength band is reflected and light in another wavelength band is transmitted.

In addition, the optical integrator according to the present invention is an optical integrator which is formed of a light transmitting member in columnar form, reflects light that enters inside so that illumination becomes uniform and emits the light, characterized in that the above described light transmitting member has an inclining surface which is inclined relative to a longitudinal direction on one end side in the longitudinal direction, and the above described inclining surface has such properties that light that enters through a side surface of the above described light transmitting member is reflected so as to be directed to the other end side in the longitudinal direction.

The illuminator according to the present invention is an illuminator, having a number of light emitting elements for emitting light in different wavelength bands, characterized in that the illuminator is provided with an optical integrator in columnar form which allows light emitted from the above described number of light emitting elements to enter, reflects the light inside so that illumination becomes uniform and emits the light, the above described optical integrator is formed of a number of block materials having light transmitting properties joined in a longitudinal direction so that joined surfaces of the number corresponding to the above described number of light emitting elements are created, the joined surfaces are inclined relative to the longitudinal direction, light emitted from the above described number of light emitting elements enters through a side surface of the above described optical integrator and respectively illuminates the corresponding joined surfaces, a first joined surface from among the number of joined surfaces, which is located closest to one end side in the longitudinal direction, has such properties that illuminating light is reflected so as to be directed to the other end side, and a joined surface which is located on the other end side from the above described first joined surface is provided with an optical film having such properties that illuminating light is reflected so as to be directed to the other end side and light in a wavelength band which is different from the wavelength band to which the light belongs is transmitted.

In addition, the illuminator according to the present invention is an illuminator, having a number of light emitting elements for emitting light in different wavelength bands, characterized in that the illuminator is provided with an optical integrator in columnar form which allows light emitted from the above described number of light emitting elements to enter, reflects the light inside so that illumination becomes uniform and emits the light, the above described optical integrator is formed of a number of block materials having light transmitting properties joined in a longitudinal direction, the joined surfaces of the above described number of block materials are inclined relative to the longitudinal direction, light emitted from at least one light emitting element from among the above described number of light emitting elements enters through a side surface of the above described optical integrator and illuminates the joined surfaces, light emitted from the other light emitting elements enters through an end surface on one end side of the above described optical integrator in the longitudinal direction and illuminates the joined surfaces, and the above described joined surfaces are provided with an optical film having such properties that illuminating light from the side surface is reflected so as to be directed to the other end side in the longitudinal direction, and illuminating light from the end surface is transmitted.

Furthermore, the illuminator according to the present invention is characterized in that the above described number of light emitting elements are placed on separate bases.
Moreover, the illuminator according to the present invention is characterized in that the above described number of light emitting elements are placed on a single base.

In addition, the illuminator according to the present invention is characterized by having a means for controlling the above described number of light emitting elements so that the elements emit light in sequence.
Furthermore, the illuminator according to the present invention is characterized by having a means for controlling the above described number of light emitting elements so that the elements emit light simultaneously.

The illuminator according to the present invention is an illuminator, having a light emitting element, characterized in that the illuminator is provided with an optical integrator in columnar form for allowing light emitted from the above described light emitting element to enter, reflecting the light inside so that illumination becomes uniform, and emitting the light, the above described optical integrator has an inclining surface which is inclined relative to a longitudinal direction on one end side in the longitudinal direction, light emitted from the above described light emitting element enters through a side surface of the above described optical integrator and illuminates the above described inclining surface, and the above described inclining surface has such properties that illuminating light is reflected so as to be directed to the other end side in the longitudinal direction.

In addition, the illuminator according to the present invention is characterized in that the illuminator is provided with an optical member for transmitting or reflecting light emitted from the above described light emitting element, and the above described optical member has such properties as to change the spread angle of light emitted from the above described light emitting element.

The projection type image display according to the present invention is characterized by having: the above described illuminator; a spatial light modulator for converting light emitted from the optical integrator in the illuminator to modulated light for an image; and a projection lens for projecting the modulated light converted by the spatial light modulator onto an object on which an image is to be projected.
In addition, the projection type image display according to the present invention is characterized by having a separation and synthesis means for separating light emitted from the light emitting element in the above described illuminator into a first polarization component in a first direction and a second polarization component which is perpendicular to the first direction, converting the first polarization component to a second polarization component and synthesizing the two polarization components.

According to the present invention, a number of block materials having light transmitting properties are joined so that the joined surfaces are inclined, and an optical film for selectively reflecting and transmitting light depending on the wavelength band is provided on the joined surfaces, and thus, an optical integrator is integrally formed, and the light path can be changed and illumination can be made uniform only by using the optical integrator. As a result, the configuration for changing the light path and making illumination uniform can be greatly simplified in comparison with the prior art and the quality of the displayed image can be improved, and in addition, the spread angle of light emitted from the light source is maintained during the total reflection and the propagation of light through the optical integrator, and therefore, the efficiency of the light source when being used can be increased. Here, it is appropriate for the angle of inclination of the joined surfaces to be 45 degrees relative to the longitudinal direction in designing the optical system.

In addition, in the case where a number of joined surfaces are provided in the optical integrator and an optical film is provided on each joined surface, the light path can be changed and illumination can be made uniform for a number of light sources which emit light in different wavelength bands using a single optical integrator. As a result, reduction in the number of parts in the illuminator and the projection type image display and reduction in the length of the light path can be achieved, and the width of the light path can be prevented from expanding even when there is a spread angle in the light emitted from the light source, and thus, reduction in the size and the cost of the illuminator and the projection type image display can be achieved. Here, either a DMD or a liquid crystal panel can be used as the light bulb in the projection type image display according to the present invention.

Furthermore, according to the present invention, an optical integrator is formed having such properties that light is reflected from the inclining surfaces, and therefore, the light path can be changed and illumination can be made uniform only by using an optical integrator having a simpler configuration. That is to say, light emitted from the light source which enters the optical integrator is reflected from an inclining surface so as to change the direction of progress, and then, reflected inside the optical integrator so as to propagate, and at this time, the spread angle of the emitted light is maintained, and therefore, the efficiency of the light source when being used is increased. In addition, a multiply reflected image of the light source corresponding to the number of times of total reflection within the optical integrator is formed on the emission surface of the optical integrator, and this means a state where the light source images are mixed, and therefore, the distribution of the illumination of the light beam becomes uniform on the emission surface of the optical integrator and the quality of the image which is projected onto a screen is improved. Here, it is appropriate for the inclining surfaces to be inclined by 45 degrees relative to the longitudinal direction in designing the optical system.

According to the present invention, a number of light emitting elements are placed on different bases, and therefore, design for heat release becomes easy and light emitting elements having high output can be used without any problems, and thus, images having high illumination can be displayed. In addition, in the case where a light emitting element is broken for some reason, it is possible to replace only the broken light emitting element, and therefore, the work of replacement is easy to carry out and the cost for replacement can be lowered.

In addition, according to the present invention, a number of light emitting elements can be placed on a single base, and thus, the intervals between adjacent light emitting elements can be optimized in the design. In particular, in the case where it is important for the size of the unit to be reduced, it becomes possible to make the intervals minimum in the design, and at the same time, the intervals between the joined surfaces in the optical integrator can also be made minimum, which further contributes to reduction in the size of the unit as a whole.

Furthermore, according to the present invention, a number of light emitting elements emit light in sequence, and thus, it becomes possible to display a color image having colors of light in different wavelength bands without fail.
Moreover, according to the present invention, a number of light emitting elements emit light simultaneously, and thus, display becomes possible with good balance between the efficiency in power supply and the amount of light (light fluxes and illumination).

In addition, according to the present invention, an optical member for changing the spread angle of light emitted from the light emitting elements is provided, and therefore, light emitted from the light emitting elements can be made to enter the optical integrator with a desired distribution of angles, and thus, the condition of the emitted light can be controlled so that it is appropriate. Here, in the case where the number of light emitting elements are placed at predetermined intervals and the optical members are positioned so as to face the respective light emitting elements, the optical members can also be placed in one plane, and furthermore, it also becomes possible to integrate a number of optical members. Here, as for the material for the optical members, materials having excellent processability other than glass, such as a synthetic resin (plastic) having light transmitting properties, can be used, and thus, reduction in cost can be achieved.

Furthermore, according to the present invention, a separation and synthesis means for separating light emitted from light emitting elements into two polarization components, converting one component to the other component and synthesizing the two components is provided, and therefore, the efficiency of the light source when used can be increased. Here, the separation and synthesis means for light emitted from the light emitting elements may be placed upstream or downstream from the optical integrator, depending on the type of light bulb in the projection type image display in which the illuminator is used.

### [Effects of the Invention]

According to the present invention, an optical integrator is integrally formed by providing an optical film for selectively reflecting and transmitting light for each wavelength band on the joined surfaces which are inclined between the number of block materials, and therefore, the efficiency of the light source when used can be increased, and the configuration for changing the light path and making illumination uniform can be greatly simplified in comparison with the prior art, reduction in the number of parts and shortening of the length of the light path can be achieved, and at the same time, reduction in the size and cost of the illuminator and the projection type image display can be achieved.

In addition, according to the present invention, an optical integrator having reflection properties on the created inclining surfaces is used, and therefore, the configuration for changing the light path and making illumination uniform can be simplified using only an optical integrator having a more simple configuration, which further contributes to reduction in the size and cost of the illuminator and the projection image display.

Furthermore, according to the present invention, a number of light emitting elements are placed on separate bases, and thus, an arrangement which is appropriate for heat release can be secured, and in addition, in the case where a light emitting element is broken, it is possible to replace only the broken light emitting element, and thus, the work of replacement can be made easier, and the cost for replacement can be reduced.
Moreover, according to the present invention, a number of light emitting elements are placed on a single base, and thus, the intervals between adjacent light emitting elements can be optimized in the design, which can further contribute to reduction in the size of the unit.

According to the present invention, a number of light emitting elements emit light in sequence, and therefore, color images having colors of light in different wavelength bands without fail can be displayed appropriately.
In addition, according to the present invention, a number of light emitting elements emit light simultaneously, and therefore, display with good balance between the efficiency in the power supply and the amount of light (light fluxes and illumination) can be achieved.

Furthermore, according to the present invention, an optical member for changing the spread angle of light emitted from light emitting elements is provided, and therefore, light emitted from the light emitting elements can be made to enter the optical integrator with a desired distribution of angles.
Moreover, according to the present invention, a separation and synthesis means for separating light emitted from the light emitting elements into two polarization components, converting one component to the other and synthesizing the two components is provided, and thus, the efficiency of the light source when used can further be increased.

### [Brief Description of the Drawings]

FIG. 1 is a diagram schematically showing the configuration of a projection type image display and an illuminator according to the first embodiment of the present invention;
FIG. 2(a) is a perspective diagram showing an optical integrator according to the first embodiment, and FIG. 2(b) is a perspective diagram showing the state before the respective block materials which form the optical integrator are joined;
FIG. 3 is a diagram schematically showing a mode in which light beams propagate through an optical integrator;
FIG. 4 is a graph showing the reflection and transmission properties of a dichroic mirror;
FIG. 5 is a perspective diagram showing an optical integrator according to a modification;
FIG. 6(a) is a diagram schematically showing the configuration of a modification of the first embodiment, and FIG. 6(b) is a diagram schematically showing the configuration of another modification;
FIG. 7 is a diagram schematically showing the configuration of a projection type image display and an illuminator according to the second embodiment;
FIG. 8 is a diagram schematically showing the configuration of a projection type image display and an illuminator according to the third embodiment;
FIG. 9 is a diagram schematically showing the configuration of a projection type image display and an illuminator according to the fourth embodiment;
FIG. 10 is a diagram schematically showing the configuration of a projection type image display of a DLP system according to the prior art;
FIG. 11 is a diagram schematically showing the configuration of a projection type image display of an LCD system according to the prior art;
FIG. 12 is a diagram schematically showing the configuration of a projection type image display of an LCD system using a cross prism according to the prior art;
FIG. 13 is a diagram schematically showing the configuration of a projection type image display of a single LCD system using LED's as the light source according to the prior art; and
FIG. 14 is a diagram schematically showing the configuration of a projection type image display of a single LCD system using LED's as the light source to which a cross prism is applied according to the prior art.

### [Explanation of Symbols]

- 50, 70, 90, 110: projection type image display
- 51, 71, 911, 912, 111a, 111b, 111c: base
- 51R, 71R, 91R, 111R: red LED
- 51G, 71G, 91G, 111G: green LED
- 51B, 71B, 91B, 111B: blue LED
- 52: first lens
- 53: second lens
- 54a: first fly eye lens
- 54b: second fly eye lens
- 55: PS separation and synthesis unit
- 56: liquid crystal panel
- 57: projection lens
- 58: control portion
- 59, 79, 99, 119: illuminator
- 60, 80, 100, 120: optical integrator
- 61: first block material
- 61a, 62a, 63a, 63b, 64a: joined surface
- 62: second block material
- 63: third block material
- 64: fourth block material
- 65R, 65G, 65B, 105G, 125R, 125B: dichroic mirror
- 85: reflective film

### [Best Mode for Carrying Out the Invention]

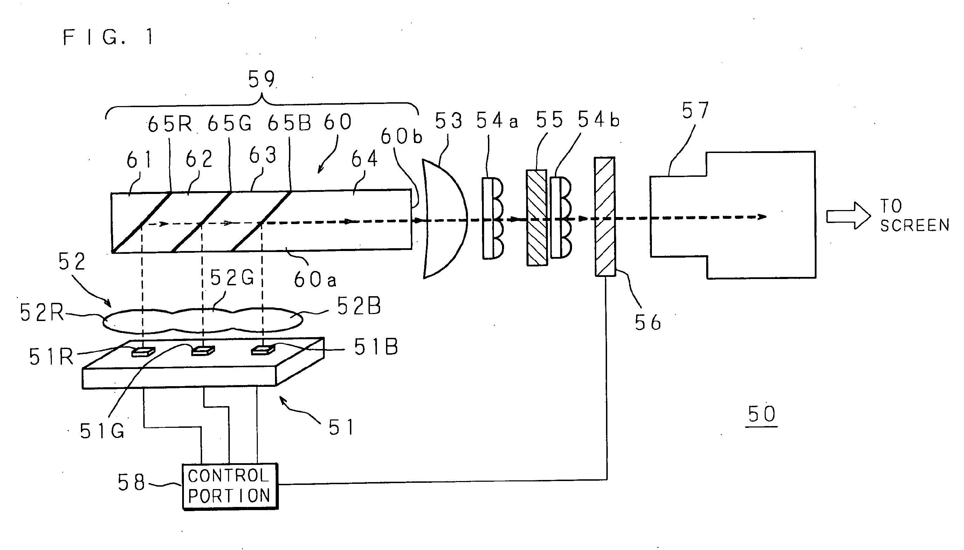

FIG. 1 shows the configuration of a projection type image display 50 (including an illuminator 59) according to the first embodiment of the present invention, and the projection type display 50 according to the present embodiment is formed so as to comprehensively include a great number of components according to the present invention, and has a form which is appropriate for reducing the cost and size.

The projection type image display 50 uses a red LED 51R, a green LED 51G and a blue LED 51B, which are a number of light emitting elements, as the light source, and a first lens 52 is placed so as to face the LED's 51R, 51G and 51B, and at the same time, an optical integrator 60 in columnar form is placed so that emitted light which passes through this first lens 52 enters the optical integrator 60. Furthermore, in the projection type image display 50, a second lens 53, a first fly eye lens 54a, a PS separation and synthesis unit 55, a second fly eye lens 54b, a transmission type liquid crystal panel 56 and a projection lens 57 are respectively placed from an emission surface 60b, which is an end portion (end surface) of the optical integrator 60 in the longitudinal direction, to the downstream side.

In the projection type image display 50, light emission from the respective LED's 51R, 51G and 51B and image formation on the liquid crystal panel 56 are controlled by the control portion 58. In addition, in the projection type image display 50, the respective LED's 51R, 51G and 51B, the first lens 52 and the optical integrator 60 form the hardware in the illuminator 59, and part of a process, which is software for light emission from the illuminator 59, is run by the control portion 58. In the following, the respective portions of the projection type image display 50 are described.

The red LED 51R is an R light emitting type light source, and the width of the wavelength band of light emitted from this (half value-half value) is 630 nm (nanometer) to 650 nm. In addition, the green LED 51G is a G light emitting type light source, and the width of the wavelength band of the emitted light is 510 nm to 550 nm. Furthermore, the blue LED 51B is a B light emitting type light source, and the width of the wavelength band of the emitted light is 440 nm to 460 nm. Here, light beams (light fluxes) emitted from respective LED's 51R, 51G and 51B are not parallel, and have a predetermined spread angle.

In addition, light emitted from the respective LED's 51R, 51G and 51B includes a polarization component (P waves) in one direction (longitudinal direction) which is perpendicular to the optical axis, and a polarization component (S waves) in the other direction (lateral direction) which is perpendicular to the optical axis and the P wave. Furthermore, the respective LED's 51R, 51G and 51B are controlled by the control portion 58 so that they turn on (light beams are emitted) for predetermined time periods at particular times during image display on the liquid crystal panel 56. According to the present embodiment, sub-frames (5.5 milliseconds) which are one third of one frame (16.7 milliseconds) for the display of the liquid crystal panel 56 are set, the control portion 58 turns on the red LED 51R (makes the red LED 51R emit light) so as to correspond to the first sub-frame, turns on the green LED 51G so as to correspond to the second sub-frame, and turns on the blue LED 1R so as to correspond to the third sub-frame.

These LED's 51R, 51G and 51B are mounted on one base 51 in a single package, and a ceramic based material which also has a heat releasing mechanism is used for the base 51. In the case where the respective LED's 51R, 51G and 51B are controlled with high power so as to be turned on, a cooling fin made of a metal material may be attached on the bottom surface of the base 51 if necessary, so that heat release from the base 51 can be improved. Here, a single package where the respective LED's 51R, 51G and 51B are mounted on the base 51 includes a substrate for mounting LED's, a circuit for protecting the LED's, and signal input terminals, as well as an assembly of a ceramic substrate, a metal film substrate or the like as a heat releasing mechanism.

As described above, the respective LED's 51R, 51G and 51B are placed in a single package, and thus, signal input terminals can be brought together, mass production becomes more efficient, the cost for manufacture can be reduced, and in addition, it also becomes possible to reduce the intervals between the respective LED's 51R, 51G and 51B. and accordingly, the intervals between the dichroic mirrors 65R, 65G and 65B described below, which are provided so as to be integrated inside the optical integrator 60, can also be reduced, which contributes to reduction in the size of the unit as a whole.

The first lens 52, which faces the LED's 51R, 51G and 51B, corresponds to an optical member for changing the spread angle of light emitted from the respective LED's 51R, 51G and 51B and adjusting the spread angles to angles of a desired distribution. The first lens 52 according to the present embodiment is integrally formed in array form by linking the three lenses 52R, 52G and 52B in disc form at the peripheral portions in accordance with the intervals between the respective LED's 51R, 51G and 51B which are mounted on the substrate 51. Here, the first lens 52 is formed of a light transmitting synthetic resin (plastic) material, and integral molding can be made easy by using such a synthetic resin.

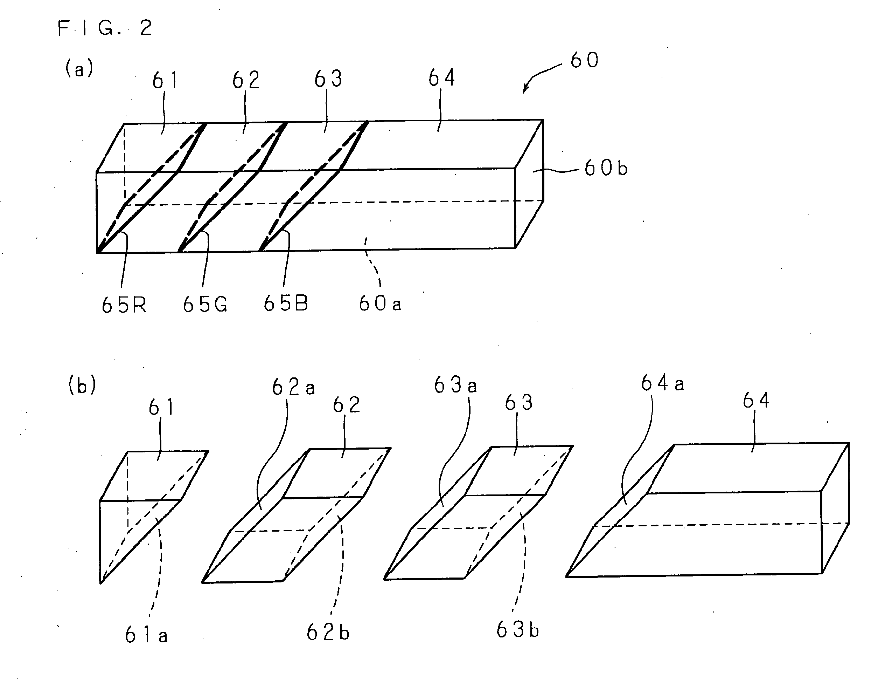

The optical integrator 60 shown in FIGS. 1, 2(a) and 2(b) is formed of a light transmitting member (for example a glass member) in columnar form, and is formed of a first block material 61 in triangular prism form, a second block material 62 in inclining cubic form, a third block material 63, also in inclining cubic form, and a fourth block material 64 in short columnar form, which are joined in the longitudinal direction in the present embodiment. Joined surfaces 61a, 62a, 62b, 63a, 63b and 64a of the respective block materials 61 to 64 are inclining surfaces inclined by 45 degrees relative to the longitudinal direction. Here, the above described longitudinal direction is parallel to the main light beam along the axis of light emitted from the respective LED's 51R, 51G and 51B , which is emitted from an emission surface 60b, and therefore, the respective joined surfaces 61a to 64a are inclined by 45 degrees relative to the main light beam along the axis of the emitted light.

The joined surfaces 61a and 62a of the first and second block materials 61 and 62 are formed in such locations as to be illuminated with light emitted from the red LED 51R in a such state that the optical integrator 60 is placed so as to face the respective LED's 51R, 51G and 51B with the first lens 52 in between. Furthermore, the joined surfaces 62b and 63a of the second and second block materials 62 and 63 are formed in such locations as to be illuminated with light emitted from the green LED 51G, and the joined surfaces 63b and 64a of the third and fourth block materials 63 and 64 are formed in such locations as to be illuminated with light emitted from the blue LED 51B.

In addition, in the optical integrator 60, dichroic mirrors 65R, 65G and 65B are formed between the joined surface 61a and the joined surface 62a, between the joined surface 62b and the joined surface 63a, and between the joined surface 63b and the joined surface 64a, respectively. Dichroic mirrors 65R, 65G and 65B are respectively formed of a film formed through vapor deposition, and concretely, an optical film corresponding to the dichroic mirror 65R is formed of an optical component having such properties that R light beams are reflected while G and B light beams are transmitted on the joined surface 62a of the second block material 62.

. Likewise, an optical film corresponding to the dichroic mirror 65G is formed of an optical component having such properties that G light beams are reflected while R and B light beams are transmitted on the joined surface 63a of the third block material 63, and an optical film corresponding to the dichroic mirror 65B is formed of an optical component having such properties that B light beams are reflected while R and G light beams are transmitted on a joined surface 64a of the fourth block material 64. As described above, dichroic mirrors 65R, 65G and 65B are formed on the respective joined surfaces 62a, 63a and 64a, and then, the respective block materials 61 to 64 are joined and secured with an adhesive or a matching oil having excellent light transmitting properties, and thus, optical integrator 60 in columnar form, where the respective dichroic mirrors 65R, 65G and 65B shown in FIGS. 1 and 2(a) are integrated, is formed.

In the formed optical integrator 60, from among the surrounding four side surfaces, one side surface facing the LED's 51R, 51G and 51B with the first lens 52 in between is used as an entrance surface 60a, and the direction of light which is emitted from the LED"s 51R, 51G and 51B and enters through the entrance surface 62a is changed by 90 degrees using the respective dichroic mirrors 65R, 65G and 65B, so that the light is reflected so as to be directed to the emission surface 60b.

In more detail: in the case where a light beam enters through the entrance surface 60a of the optical integrator 60 and is projected onto the dichroic mirror 65R located on one end side in the longitudinal direction at an angle of approximately 45 degrees, the R light beam included in this light is reflected from the dichroic mirror 65R while G and B light beams are transmitted. In addition, in the case where a light beam enters through the entrance surface 60a and is projected onto the dichroic mirror 65G, which is located at the center, at an angle of approximately 45 degrees, the G light beam is reflected from the dichroic mirror 65G while R and B light beams are transmitted. Furthermore, in the case where a light beam enters through the entrance surface 60a and is projected onto the dichroic mirror 65B, which is located on the side closest to the emission surface 60b, at an angle of approximately 45 degrees, the B light beam is reflected from the dichroic mirror 65B, while R and G light beams are transmitted.

Accordingly, an R light beam emitted from the red LED 51R is cited as an example in the following description, in reference to FIG. 1. The R light beam enters through the entrance surface 60a of the optical integrator 60 and illuminates the dichroic mirror 65R, and then, is reflected from this dichroic mirror 65R and transmits through the dichroic mirrors 65G and 65B so as to reach the emission surface 60b. The R light beam reflected from the dichroic mirror 65R is totally reflected from the four side surfaces within the optical integrator 60 before reaching the emission surface 60b, and forms a multiply reflected image of a light source image on the emission surface 60b in accordance with the number of times of total reflection, and thus, the illumination of the R light beam on the emission surface 60b is uniform.

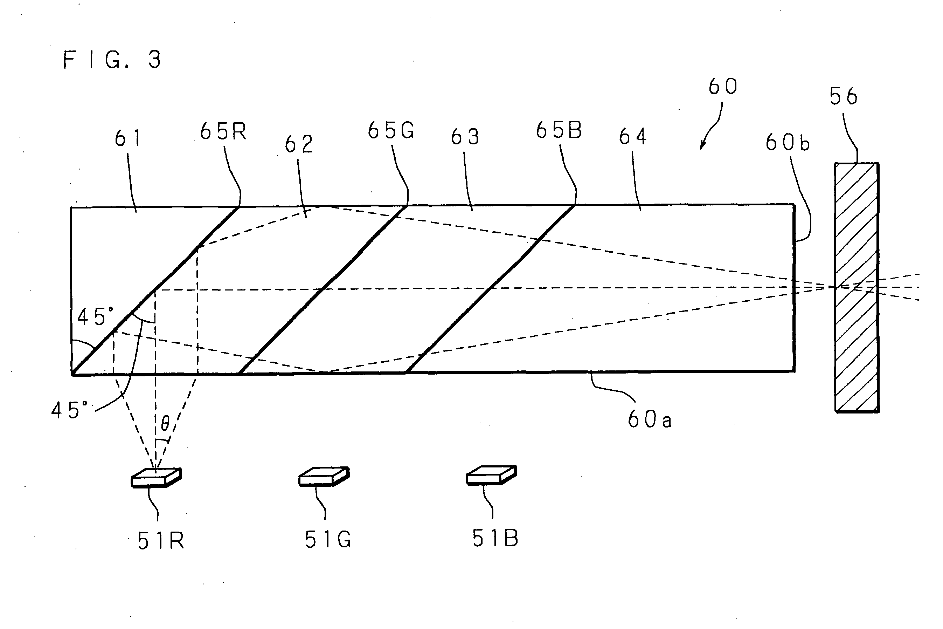

FIG. 3 shows a state where the R light beam emitted from the above described red LED 51R is reflected inside the optical integrator 60. The R light beam emitted from the red LED 51R has a predetermined spread angle θ (light distribution: maximum angle for emission) relative to the center of the optical axis, and passes through the first lens 52before entering the optical integrator 60 in order to adjust the distribution of light θ within a predetermined range (see FIG. 1). Here, in the case where light is emitted with an appropriate distribution of light θ, it becomes possible to omit the first lens 52. In addition, the first lens 52, the second lens 53, the first fly eye lens 54a, the PS separation and synthesis unit 55 and the second fly eye lens 54b are omitted in FIG. 3.

When light emitted from the red LED 51R (R light beam) enters the optical integrator 60, the maximum angle for emission of the R light beam which progresses through the optical integrator 60 is approximated to θ/n, when the index of refraction of the respective block materials 61 to 64 which form the optical integrator 60 is n. The R light beam which is reflected from the dichroic mirror 65R progresses while repeatedly reflecting (total reflection) in the interface of the four side surfaces which surround the optical integrator 60, and is radiated to the outside (into the air) from the emission surface 60b. At this time, the maximum angle for emission of the R light beam when emitted into the air from the emission surface 60b is θ, which is not different from the spread angle of the red LED 51R. In addition, a multiply reflected image of the light source of the R light beam is formed on the emission surface 60b in accordance with the number of times of reflection in the interface of the optical integrator 60, and therefore, the inconsistency in illumination of the image of the light source is solved, and illumination becomes uniform.

Here, when the G light beam emitted from the green LED 51G illuminates the dichroic mirror 65G, the G light beam is reflected from the dichroic mirror 65G and then transmits through the dichroic mirror 65B so as to reach the emission surface 60b, and the form of the reflection up to the emission surface 60b is total reflection, as for the above described R light beam, and illumination on the emission surface 60b is uniform. In addition, when the B light beam emitted from the blue LED 51B is projected onto the dichroic mirror 65B, the B light beam is reflected from the dichroic mirror 65B and then reaches the emission surface 60b, and the form of the reflection up to the emission surface 60b is total reflection, as for the above described R and G light beams, and illumination on the emission surface 60b is uniform. Here, the positional relationship between the optical integrator 60 and the liquid crystal panel 56 is set so that the light beams emitted from the emission surface 60b are focused on the liquid crystal panel 56.

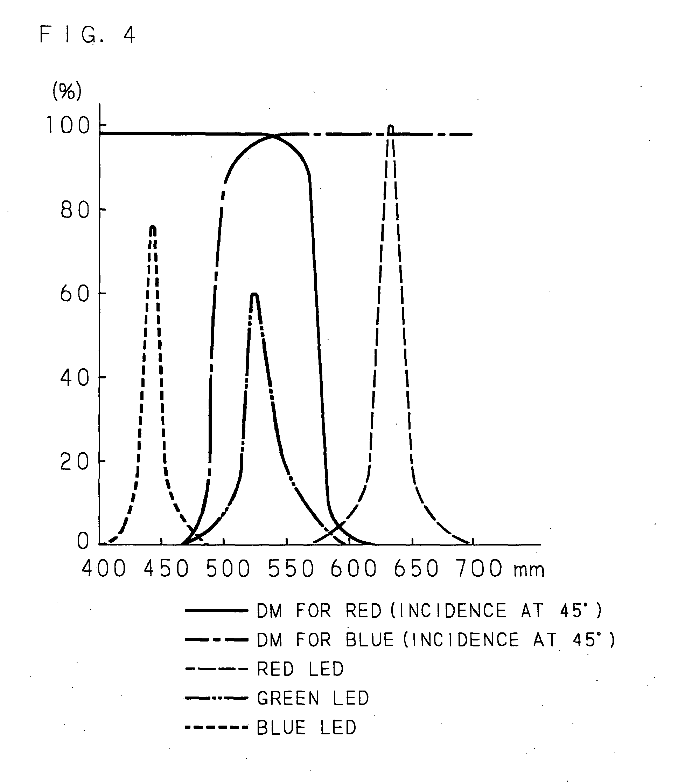

FIG. 4 is a graph showing the transmittance (%) of the dichroic mirror 65R (DM for red) and the dichroic mirror 65B (DM for blue) provided in the optical integrator 60 against the wavelength band (nm). This graph is for a light beam (synthetic wave: (P wave + S wave)/2) at the center of the design of the formed film, where the incident angle to the dichroic mirrors 65R and 65B is 45 degrees. Here, the graph shows the properties in terms of light intensity in the wavelength bands of light emitted from the red LED 51R, the blue LED 51G and the green LED 51B for reference, and the curves for the respective LED's 51R, 51G and 51B indicate the relative intensity (%) in the case where the intensity at the peak of the red LED 51R is 100 %. In addition, it is difficult, in practice, to make light emitted from the respective LED's 51R, 51G and 51B completely parallel light beams, and therefore, the incident angle of practical light beams with the dichroic mirrors 65R and 65B has a numeric value within a range of approximately 45 degrees +/- 5 degrees to 15 degrees.

The transmission curves (curves drawn with solid line and one-dot chain line) shown in the graph of FIG. 4 generally shift to the side where the wavelength bands are longer when the incident ) angle of the light beam to the dichroic mirrors 65R and 65B becomes smaller than 45 degrees, and the part having a short wavelength in the wavelength band of the G-light beam (green LED) is sometimes reflected from the dichroic mirror 65B (DM for blue), which reflects light in the wavelength band of the B light beam (blue LED). In addition, when the incident angle becomes greater than 45 degrees, the transmission curves (curves drawn with solid line and one-dot chain line) shift to the side where the wavelength bands are shorter. In this case, the part having a long wavelength in the wavelength band of the G light beam (green LED) is sometimes reflected from the dichroic mirror 65R, which reflects light in the wavelength band of the R light beam (red LED). Such inconsistency in the incident angle of the light beams is a cause of colors mixing and a factor lowering the purity of color.

As a technique for preventing colors from mixing and the efficiency of the light source from lowering due to shifting of the wavelength bands resulting from the inconsistency in the incident angle with the dichroic mirrors 65R and 65B when used, there is an easy measure using a short wavelength light emitting element, such as a laser, as the light source, and in addition, adopting a short wavelength light emitting type (narrow wavelength band light emitting type) LED as the light source, and selecting LED's (R, G and B) having wide gaps between the center wavelength of light emitted from each as the light source. In addition, a multilayer film structure can be applied to the film of the dichroic mirrors 65R, 65G and 65B of the optical integrator 60, so that the number of layers increases and a material having a high index of refraction is used, and thus, the shifting of the wavelength band due to inconsistency in the incident angle with the dichroic mirrors 65R, 65G and 65B can be eliminated.

Here, the illuminator 59 according to the first embodiment shown in FIG. 1 has a second lens 53, a first fly eye lens 54a, a PS separation and synthesis unit 55 and a second fly eye lens 54b, as do the projection type image displays 30 and 40 of FIGS. 13 and 14, in addition to the above described respective LED's 51R, 51G and 51B, the first lens 52 and the optical integrator 60. The second lens 53 and the first and second fly eye lenses 54a and 54b function to make the state of light beams appropriate, in the same manner as in the prior art.

The PS separation and synthesis unit 55 corresponds to the means for separating and synthesizing light emitted from the respective LED's 51R, 51G and 51B, and has surfaces where a number of polarization separation films which are inclined by 45 degrees relative to the surface through which the emitted light (light beams) enters are formed in slit form inside, and has a λ/2 wavelength plate for making the wavelength of the P wave of a light beam half (not shown) on the surface from which a light beam is emitted. Accordingly, when a light beam in a non-polarized state enters the PS separation and synthesis unit 55, P waves (corresponding to the first polarization component) and S waves (corresponding to the second polarization component in the light beam separate from each other, and S waves are reflected from the surface where the first polarization separation film is formed and then reflected from the second polarization conversion film, which is located adjacent to the this surface where the first polarization separation film is formed so as to be emitted. In addition, P waves transmit through the surface where the above described first polarization separation film is formed so as to be emitted, and at this time, the P waves are converted to S waves by the above described λ/2 wavelength plate so as to be synthesized with the original S waves, and thus, the light beam that is emitted from the PS separation and synthesis unit 55 is, ideally, S waves which are two times greater.

In addition, in the projection type image display 50 according to the first embodiment, the liquid crystal panel 56 is placed on the downstream side from the PS separation and synthesis unit 55 via the second fly eye lens 54b, and therefore, light beams which enter the liquid crystal panel 56 are polarized and controlled by the PS separation and synthesis unit 55 as S waves in a direction toward one side, and thus, the light source can be efficiently used. A single type liquid crystal panel 56 is controlled by a control portion 58 so that an R image signal is inputted in sync with the first sub-frame, where the red LED 51R turns on. As a result, the R light beam from the red LED 51R becomes an R image (light beam for R image) when emitted after passing through the liquid crystal panel 56, and thus, light beams (modulated light) of the R image are projected from the projection lens 57 onto a screen.

In the same manner, the green LED 51G turns on in the second sub-frame and the blue LED 51B turns on in the third sub-frame, so that gradation is controlled between the respective sub-frames on the liquid crystal panel 56, and the modulated light for the G image and the D image is projected onto the screen following the projection of the modulated light for the R image. In this manner, R, G and B images are projected and displayed in sequence onto a screen during a period of one frame, and switching between the R, G and G images is carried out at 180 Hz, which is color resolution that cannot be followed by humans, and therefore, a color image is visually recognized.

As described above, in the projection type image display 50 and the illuminator 59 according to the first embodiment, the optical integrator 60, where dichroic mirrors 65R, 65G and 65B are integrated, changes the light path of light emitted from the respective LED's 51R, 51G and 51B, and makes illumination uniform, and therefore, reduction in the number of parts, shortening of the length of the light path and increase of the light source when used can be achieved, and furthermore, reduction in the size and cost of the unit can be achieved when an appropriate method is used for mounting the respective LED's 51R, 51G and 51B. Here, the projection type image display 50 can be applied to either type: front projection or rear projection.

In addition, various modifications, in addition to the above described embodiment, are possible for the projection type image display 50 according to the first embodiment. In the optical integrator 60 shown in FIGS. 2(a) and 2(b), for example, an optical film for each dichroic mirror 65R, 65G and 65B may be formed on the joined surfaces 61a, 62b and 63b, on the side facing the above described joined surfaces 62a, 63a and 64a, respectively, instead of forming dichroic mirrors 65R, 65G and 65B on the joined surfaces 62a, 63a and 64a, respectively. In addition, an optical film having a hologram function for providing the same properties as the dichroic mirrors 65R, 65G and 65B may be formed on the respective joined surfaces 61a to 64a instead of the dichroic mirrors 65R, 65G and 65B.

Furthermore, it is possible to replace the dichroic mirror 65R, which is located on one end side of the optical integrator 60 in the longitudinal direction, with a mirror having such properties as to reflect only light beams or a reflective film, such as a hologram, because the dichroic mirror 65R only reflects R light beams and does not transmit G and B light beams in the illuminator 59. Moreover, a separation and synthesis process is carried out on the spread angle and the polarized wave components (P waves and S waves) of light emitted from the red LED 51R, before the light enters the optical integrator 60 in the configuration, and therefore, total reflection is caused only from the joined surfaces 62a in the optical integrator 60, and in this case, it becomes possible not to form the optical film on the joined surface 61a or the joined surface 62a.

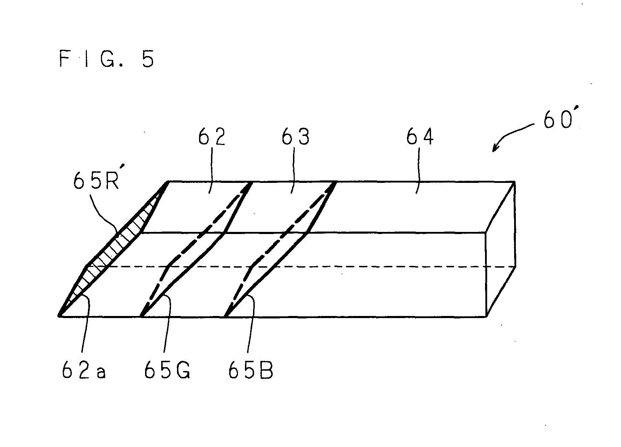

FIG. 5 shows an optical integrator 60' according to a modification, and in the case where an optical film 65R' having only reflection properties as described above is formed on the joined surface 62a of the second block material 62, a configuration where the first block material 61 shown in FIG. 2(b) is omitted becomes possible. In this optical integrator 60', R light beams that enter are reflected from an optical film 65R' (reflective film) which is provided on an inclining surface 62a on one end side in the longitudinal direction so as to be directed to the other end side.

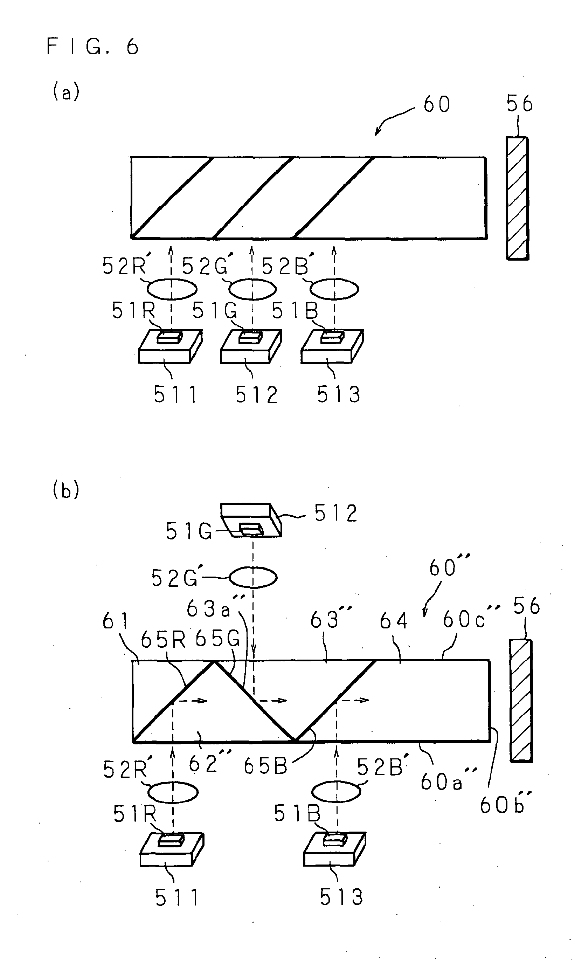

In addition, FIG. 6(b) shows an optical integrator 60" according to another modification, which is an example of a configuration where not all the dichroic mirrors 65R, 65G and 65B, which are integrally provided, are formed parallel. In this optical integrator 60", a second block material 62" and a third block material 63" to which two block materials which are the same as the first block material 61 are connected are used, and a dichroic mirror 65G is provided on the joined surface 63a" of the third block material 63". The optical integrator 60" of FIG. 6(b) is appropriate in the case where, for some reason, a number of light emitting elements cannot be provided in the same direction.

In each of the above described optical integrators 60, 60' and 60", holding portions, for example ribs, may be provided inside the housing (not shown) of the projection type image display 50, and the respective block materials 61 to 64 may be sandwiched between these holding portions so as to be secured in such a state that the respective block materials 61 to 64 are joined in the configuration, instead of the respective block materials 61 to 64 being joined with an adhesive or the like. In addition, independent holding members may be used instead of using ribs provided in the housing for holding and securing the block materials as described above.

Furthermore, FIG. 6(a) shows a mode where the respective LED's 51R, 51G and 51B are placed on separate bases 511, 512 and 513, respectively, instead of being mounted on one base 51 as shown in FIG. 1. By adopting this mode, it becomes possible to individually replace and repair LED's in the case where it becomes impossible to turn on one of the LED's 51R, 51G and 51B for some reason.

In addition, when the respective LED's 51R, 51G and 51B are placed on individual bases 511, 512 and 513, the first lens 52 in array form of FIG. 1 may be separated into lenses 52R', 52G' and 52B', which are placed in the vicinity of the respective LED's 51R, 51G and 51B and face these. Here, it is also possible to use a flat substrate where a transmitting hologram functional element is formed and a reflective mirror (reflector) in elliptical form or secondary curve form which reflects light emitted from the respective LED's 51R, 51G and 51B and changes the spread angle, instead of the first lens 52 and the lenses 52R', 52G' and 52B'.

Furthermore, when the respective LED's 51R, 51G and 51B are placed on individual bases 511, 512 and 513, as shown in FIG. 6(b), it is also possible to place the respective LED's 51R, 51G and 51B in different directions corresponding to the directions of inclination of the dichroic mirrors 65R, 65G and 65B of the optical integrator 60", instead of in the same direction. In the case shown in FIG. 6(b), the direction in which the dichroic mirror 65G is inclined is different from that of the other dichroic mirrors 65R and 65B, and therefore, the base 512, on which the green LED 51G is placed, and the lens 52G' are placed on the upper side of the optical integrator 60". In this case, light emitted from the red LED 51R and the blue LED 51B enters through the entrance surface 60a" on the lower side, and light emitted from the green LED 51G enters through the entrance surface 60c" on the upper side. Accordingly, freedom in terms of the layout of the respective LED's 51R, 51G and 51B can be improved by using the optical integrator 60" according to the modification.

In addition, there are lasers having such properties as to be safe for the eyes, laser diodes, organic EL (electroluminescence), charge releasing elements and the like as substitute light emitting elements for the respective LED's 51R, 51G and 51B, and these substitutes may be used as the light source.

Furthermore, as for the time for turning on the respective LED's 51R, 51G and 51B, it is also possible for the control portion 58 to carry out control in such a manner that a total of four sub-frames are set by dividing one frame into four, instead of dividing one frame into three, the red LED 51R is turned on in the first sub-frame, the green LED 51G is turned on in the second sub-frame, the blue LED 51B is turned on in the third sub-frame, and all of the LED's 51R, 51G and 51B are simultaneously turned on in the fourth sub-frame. Here, the order in which the respective LED's 51R, 51G and 51B are turned on during a period of one frame is not limited to the above described order, and the same projection image can be displayed, as long as the order in which the LED's are turned on is changed appropriately.

In addition, instead of using the transmission type liquid crystal panel 56, a reflection type liquid crystal panel or a micro mirror array element, such as a DMD, may be used. Here, in the case where a reflection type element is used, as shown in FIG. 10, the light path of light beams emitted from the optical integrator is generally bent by approximately 90 degrees in the configuration.

Furthermore, it is also possible to use a color LCD as the liquid crystal panel 56. Color LCD's have each pixel divide into three dots, so that a red filter, a green filter and a blue filter are formed in the three dots, and display color images by controlling the gradation in each dot. In the case where such a color LCD is used, it becomes possible for the control portion 58 to control the respective LED's 51R, 51G and 51B so that they are turned on simultaneously and are constantly turned on, instead of being turned on in sequence timewise, and projection display of a color image becomes possible, by carrying out gradation control of the respective colors of the color LCD simultaneously during one frame period of 60 Hz.

Accordingly, it becomes possible to use a liquid crystal material having poor switching properties, by using a color LCD as the liquid crystal panel 56, which contributes to simplification and reduction in size of the drive circuit for the respective LED'S 51R, 51G and 51B, and therefore, reduction in the cost and size of the projection type image display 50 can be achieved.

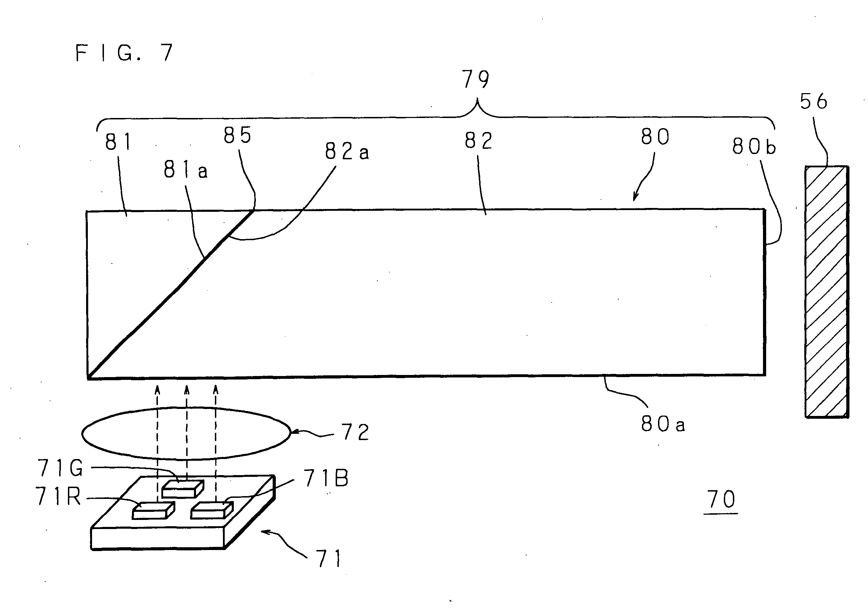

FIG. 7 is a diagram schematically showing the configuration of the main part of the projection type image display 70 (including an illuminator 79) according to the second embodiment of the present invention. The projection type image display 70 according to the second embodiment is characterized in that an optical integrator 80 having a reflective film 85 is used and a red LED 71R, a green LED 71G and a blue LED 71B are arranged in the form of a delta (triangular form). Here, though not shown in FIG. 7, the optical integrator 80 has a second lens 53, a first fly eye lens 54a, a PS separation and synthesis unit 55, a second fly eye lens 54b, a projection lens 57 and a control portion 58 on the downstream side from the emission surface 80b, as does the projection type image display 50 according to the first embodiment shown in FIG. 1, and the same symbols as in the first embodiment are attached to parts having the same configuration as in the first embodiment in the following description.

The optical integrator 80 according to the second embodiment is formed by joining a first block material 81 having the same form as the first block material 61 shown in FIG. 2(b) and a second block material 82 having basically the same form as the fourth block material 64 in FIG. 2(b) in the longitudinal direction. The joined surface 81a and 82a of each block material 81 and 82 is located on one end side in the longitudinal direction, and is an inclining surface which is inclined in the same manner as the joined surfaces 61a and 64 according to the first embodiment shown in FIG. 2(b), and a film forming process is carried out on the inclining surface 82a of the second block material 82, so that a reflective film 85 having such properties as to reflect light beams is formed.

In addition, the respective LED's 71R, 71G and 71B are placed on the substrate 71 at minimal intervals in such a positional relationship as to be in the form of a delta, and are integrally packaged. By providing a package having an arrangement in the form of a delta in this manner, the area occupied by the respective LED's 71R, 71G and 71B becomes minimal, and the spread angle of light emitted from the respective LED's 71R, 71G and 71B is adjusted by one circular first lens 72, so that light can enter through the entrance surface 80a of the optical integrator 80. The same configuration as in the first embodiment, except for the part relating to the above description, is adopted for the projection type image display 70 according to the second embodiment.

Accordingly, light emitted from the respective LED's 71R, 71G and 71B enters the optical integrator 80, and is reflected from the reflective film 85, repeatedly totally reflected and emitted from the emission surface 80b with uniform illumination, so that a projection display of an image is gained. Here, the projection type image display 70 according to the second embodiment can also be applied to either type: front projection or rear projection, and applicable modifications from among the various types of modifications described in the first embodiment can be adopted.

In particular, in the case where a color LCD is used for the liquid crystal panel 56, control of the respective LED's 71R, 71G and 71B in accordance with a technique for constantly turning them on is possible, and it is also possible to use an additional white light emitting type LED as the light source which is constantly turned on. Furthermore, a technique for combining a turquoise light emitting type LED, a purple light emitting type LED and a yellow light emitting type LED as the light source which is constantly turned on can be used. Therefore, it is important for a projection display of a bright color image to select such a combination that the efficiency of the power supply is the highest and the amount of light of the LED's (light fluxes and illumination) becomes the greatest from among a great number of combinations of LED's of various colors.

In addition, in the optical integrator 80 according to the second embodiment, the reflective film 85 can be formed of a multilayer film or a hologram functional element or a mirror can be used instead of the reflective film 85. Furthermore, it is also possible to place a PS separation and synthesis unit 55 on the upstream side from the entrance surface 80a of the optical integrator 80. In this case, light emitted from the light source is polarized on one side by the PS separation and synthesis unit 55, before being emitted to the optical integrator 80, and thus, light emitted from the light source can be totally reflected and emitted through the emission surface 80b using the difference in the index of refraction between the respective block materials 82, which are a glass base, and the surrounding air, without providing a reflective film 85, a hologram functional element or a mirror on the joined surface 81a of the first block material 81 or the joined surface 82a of the second block material 82 in the optical integrator 80. In such a configuration, the projection type image display 70 can further be reduced in size and cost, together with the illuminator 79, and furthermore, the range of possible applications for the illuminator can be broadened; for example, it can be used as a flashlight when applied to cellular phones.

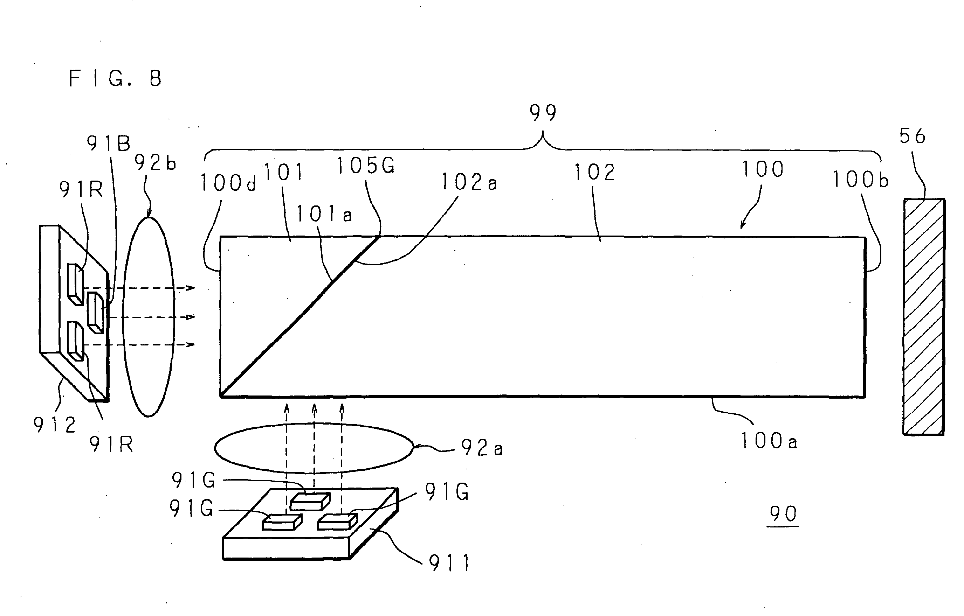

FIG. 8 is a diagram schematically showing the configuration of the main part of the projection type image display 90 (including an illuminator 99) according to the third embodiment of the present invention. The projection type image display 90 according to the third embodiment is characterized in that an optical integrator 100 having a dichroic mirror 105G is used, and a number of green LED's 91G are placed so as to face a first entrance surface 100a, which is one side surface of the optical integrator 100, and at the same time, red LED's 91R and a blue LED 91B are placed so as to face a second entrance surface 100d, which is one end surface in the longitudinal direction.

Here, though not shown in FIG. 8, the projection type image display 90 according to the third embodiment has a second lens 53, a first fly eye lens 54a, a PS separation and synthesis unit 55, a second fly eye lens 54b, a projection lens 57 and a control portion 58 on the downstream side from the emission surface 100b of the optical integrator 100, as does the projection type image display 50 according to the first embodiment shown in FIG. 1. The above described portions, including the liquid crystal panel 56 are the same as in the first embodiment, and therefore, the same symbols as in the first embodiment are used.

The optical integrator 100 according to the third embodiment is formed of a first block material 101 and a second block material 102 having the same configuration as the first block material 81 and the second block material 82 which form the optical integrator 80 according to the second embodiment shown in FIG. 7, and a dichroic mirror 105G having such properties as to reflect G light beams and transmit R and B light beams is provided between the joined surface 101a of the first block material 101 and the joined surface 102a of the second block material 102. Here, the dichroic mirror 105G is formed as a film of an optical component having the above described optical properties on the inclining joined surface 102a in the second block material 102.

The number of green LED's 91G, which are placed on the first entrance surface 100a side of the optical integrator 100, with a lens for green 92a in between are arranged on a substrate 911 at minimal intervals in such a positional relationship as to be in the form of a delta and integrally packaged. Two red LED's 91R and one blue LED 91B, which are placed on the second entrance surface 100d side of the optical integrator 100 with a lens for red and blue 92b in between, are arranged on a substrate 912 at minimal intervals in such a positional relationship as to be in the form of a delta and integrally packaged.

In the projection type image display 90 according to the third embodiment, G light beams emitted from the number of green LED's 91G pass through the lens for green 92a and enter through the first entrance surface 100a of the optical integrator 100 so as to illuminate the dichroic mirror 105G, and then reflected from the dichroic mirror 105G and repeatedly totally reflected, and propagate through the optical integrator 100 and are emitted from the emission surface 100b with uniform illumination. In addition, R and B light beams emitted from the two red LED's 91R and the blue LED 91B, respectively, pass through the lens for red and blue 92b, enter through the second entrance surface 100d of the optical integrator 100 so as to illuminate the dichroic mirror 105G, and then transmit through the dichroic mirror 105G, are repeatedly totally reflected, and propagate through the optical integrator 100 so as to be emitted from the emission surface 100b with uniform illumination.

Thus, in the projection type image display 90 according to the third embodiment, the optical integrator 100 has an even simpler configuration, and freedom in terms of the arrangement of the respective LED's 91R, 91G and 91B is improved, which loosens the restrictions in terms of the design of the unit and contributes to reduction in the size and cost of the unit. Here, the projection type image display 90 according to the third embodiment can be applied to either type: front projection or rear projection.

In addition, the projection type image display 90 according to the third embodiment is not limited to the above described embodiment, and an R reflective dichroic mirror having such properties as to reflect R light beams and transmit G and B light beams or a B reflective dichroic mirror having such properties as to reflect B light beams and transmit R and G light beams, for example, may be used instead of the dichroic mirror 105G. In the case where an R reflective dichroic mirror is used, it is necessary to place a red LED 91R on the first entrance surface 100a side of the optical integrator 100, and at the same time, place a green LED 91G and a blue LED 91B on the second entrance surface 100d side. In addition, in the case where a B reflective dichroic mirror is used, it is necessary to place a blue LED 91B on the first entrance surface 100a side of the optical integrator 100, and at the same time, place a red LED 91R and a green LED 91G on the second entrance surface 100d side.

Furthermore, modifications which can be applied to the projection type image display 90 according to the third embodiment from among the various types of modifications described in the first embodiment can be adopted, and in the case where, for example, a color LCD is used for the liquid crystal panel 56, the respective LED's 91R, 91G and 91B can be controlled so as to be constantly turned on, and in this case, as described in the modification of the second embodiment, a great number of combinations of LED's of various colors can be used in such a manner that a white light emitting type LED is used, or a turquoise color light emitting type LED, a violet light emitting type LED and a yellow light emitting type LED can be combined as the light source.

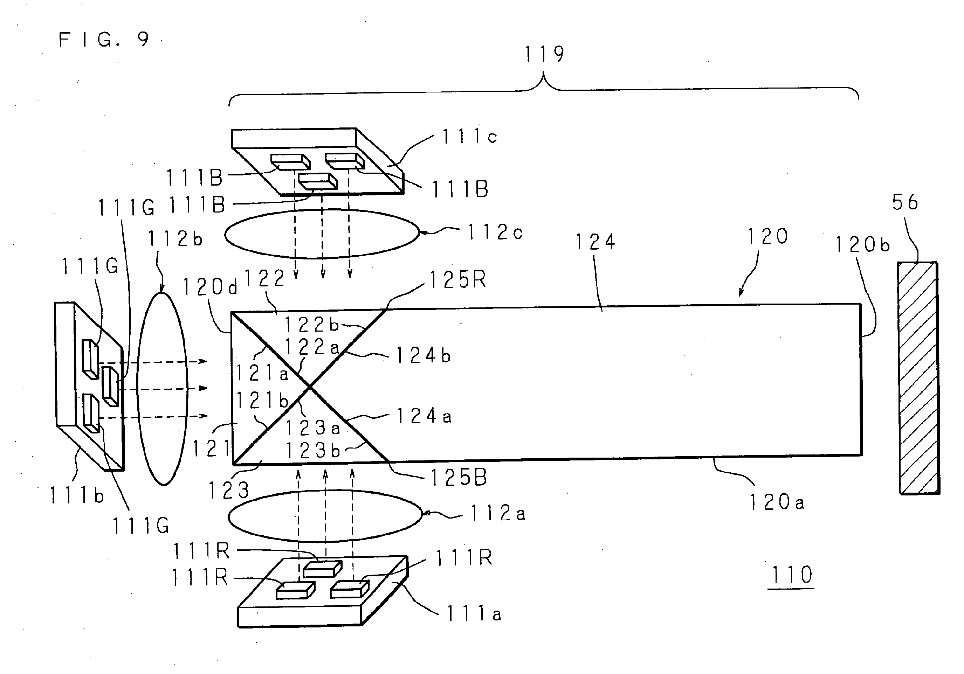

FIG. 9 is a diagram schematically showing the main part of the projection type image display 110 (including an illuminator 119) according to the fourth embodiment of the present invention. The projection type image display 110 according to the fourth embodiment is characterized in that an optical integrator 120 where dichroic mirrors 125R and 125B are provided in such a manner that they cross is used, and at the same time, a red LED 111R, a green LED 111G and a blue LED 111B are placed so as to respectively face a first entrance surface 120a, which is one side surface of the optical integrator 120, a second entrance surface 120d, which is one end surface in the longitudinal direction, and a third entrance surface 120c, which is another side surface.

Here, though not shown in FIG. 9, the projection type image display 110 according to the fourth embodiment has a second lens 53, a first fly eye lens 54a, a PS separation and synthesis unit 55, a second fly eye lens 54b, a projection lens 57 and a control portion 58, as does the projection type image display 50 according to the first embodiment shown in FIG. 1, and the above described portions, including the liquid crystal panel 56, are the same as in the first embodiment, and therefore, the same symbols as in the first embodiment are used.

The optical integrator 120 according to the fourth embodiment is in columnar form and uses a first block material 121, a second block material 122 and a third block material 123, which are in the form of a triangular prism gained by dividing the first block material 61 shown in FIG. 2(b) into two along a plane including vertexes, and at the same time, uses a fourth block material 124 in such a form that a triangular prism, for example a first block material 121, protrudes from one end surface of a short prism form. The respective block materials 121 to 124 having light transmitting properties are joined in the longitudinal direction so as to form the optical integrator 120.

In more detail: a joined surface 122a corresponding to one inclining surface of the second block material 122 and a joined surface 123a corresponding to one inclining surface of the third block material 123 are joined to joined surfaces 121a and 121b corresponding to the two inclining surfaces of the first block material 121, and furthermore, two inclining joined surfaces 124a and 124b of the fourth block material 124 are joined to a joined surface 122b corresponding to the other inclining surface of the second block material 122 and a joined surface 123b corresponding to the other inclining surface of the third block material 123.

In addition, an optical film having such properties as to reflect R light beams while transmitting G and B light beams is formed on the joined surface 123a of the third block material 123 and one joined surface 124b of the fourth block material 124 as a dichroic mirror 125R. Furthermore, an optical film having such properties as to reflect B light beams while transmitting R and G light beams is formed on the joined surface 122a of the second block material 122 and on the other joined surface 124a of the fourth block material 124 as a dichroic mirror 125B.

A number of red LED's 111R which are placed on the first entrance surface 120a side of the optical integrator 120 with a lens for red 112a in between are arranged on a substrate 111a at minimal intervals in such a positional relationship as to be in the form of a delta and integrally packaged. In addition, a number of green LED's 111G which are placed on the second entrance surface 120d side of the optical integrator 120 with a green lens 112b in between are arranged on a substrate 111b at minimal intervals in such a positional relationship as to be in the form of a delta and integrally packaged. Furthermore, a number of blue LED's 111B which are placed on the third entrance surface 120c side of the optical integrator 120 with a lens for blue 112c in between are arranged on a substrate 111c at minimal intervals in such a positional relationship as to be in the form of a delta and integrally packaged.

In the projection type image display 110 according to the fourth embodiment, R light beams emitted from the number of red LED's 111R pass through the lens for red 112a, enter through the first entrance surface 120a of the optical integrator 120 and illuminate the dichroic mirror 125R, and then, are reflected from the dichroic mirror 125R, repeatedly totally reflected, and propagate through the optical integrator 120 so as to be emitted from the emission surface 120b with uniform illumination.

In addition, G light beams emitted from the number of green LED's 111G pass through the lens for green 112b, enter through the second entrance surface 120d of the optical integrator 120 and illuminate two dichroic mirrors 125R and 125B, and then, pass through the respective dichroic mirrors 125R and 125B, are repeatedly totally reflected, and propagate through the optical integrator 120 so as to be emitted from the emission surface 120b with uniform illumination. Furthermore, B light beams emitted from the number of blue LED's 111B pass through the lens for blue 112c, enter through the third entrance surface 120c of the optical integrator 120 and illuminate the dichroic mirror 125B, and then, are reflected from the dichroic mirror 125B, are repeatedly totally reflected, and propagate through the optical integrator 120 so as to be emitted from the emission surface 120b with uniform illumination.

As described above, in the projection type image display 110 according to the fourth embodiment, the optical integrator 120 is provided with two dichroic mirrors 125R and 125B which cross, and therefore, light beams can be totally reflected with a short total length in comparison with the optical integrator 60 according to the first embodiment, which further contributes to reduction in the size and cost of the unit. In addition, in the projection type image display 110 according to the fourth embodiment, the optical integrator 120 works in the same manner as a cross prism, and therefore, it becomes possible to make the number of LED's 111R, 111G and 111B placed maximum, and thus, a brightest possible image can be displayed on a screen. Here, it is also possible to apply the projection type image display 110 according to the fourth embodiment to either type: front projection or rear projection.

In addition, the projection image display 110 according to the fourth embodiment is not limited to the above described embodiment, and the type of dichroic mirrors provided in the optical integrator 120 can be changed so as to be appropriate in accordance with the LED's placed on the second entrance surface 120d side of the optical integrator 120, for example. That is to say, in the case where a red LED 111R is placed on the second entrance surface 120d side, a dichroic mirror for green 125G is provided in the optical integrator 120 of FIG. 9 instead of the dichroic mirror for red 125R, and a green LED 111G is provided on the first entrance surface 120a side. In addition, in the case where a blue LED 111B is placed on the second entrance surface 120d side, a dichroic mirror for green 125G is provided in the optical integrator 120 of FIG. 9 instead of the dichroic mirror for blue 125B, and a green LED 111G is provided on the third entrance surface 120c side.

Furthermore, modifications which can be applied to the projection type image display 110 according to the fourth embodiment, from among the various types of modifications described in the first embodiment, can be adopted, and specifically, a color LCD may be used as the liquid crystal panel 56, the respective LED's 111R, 111G and 111B may be constantly turned on, and appropriate LED's of various colors may be combined as the light source, as described in the modifications of the third embodiment.

## Claims

1. An optical integrator which is formed of a light transmitting member in columnar form, reflects light that enters inside so that illumination becomes uniform and emits the light, **characterized in that**
said light transmitting member is formed of a number of block materials joined in a longitudinal direction,
the joined surfaces of said number of block materials are inclined relative to the longitudinal direction, and
said joined surfaces comprise an optical film having such properties that light in one wavelength band is reflected and light in another wavelength band is transmitted.

2. An optical integrator which is formed of a light transmitting member in columnar form, reflects light that enters inside so that illumination becomes uniform and emits the light, **characterized in that**
said light transmitting member has an inclining surface which is inclined relative to a longitudinal direction on one end side in the longitudinal direction, and
said inclining surface has such properties that light that enters through a side surface of said light transmitting member is reflected so as to be directed to the other end side in the longitudinal direction.

3. An illuminator, comprising a number of light emitting elements for emitting light in different wavelength bands, **characterized in that**
the illuminator comprises an optical integrator in columnar form which allows light emitted from said number of light emitting elements to enter, reflects the light inside so that illumination becomes uniform and emits the light,
said optical integrator is formed of a number of block materials having light transmitting properties joined in a longitudinal direction so that joined surfaces of the number corresponding to said number of light emitting elements are created,
the joined surfaces are inclined relative to the longitudinal direction,
light emitted from said number of light emitting elements enters through a side surface of said optical integrator and respectively illuminates the corresponding joined surfaces,
a first joined surface from among the number of joined surfaces, which is located closest to one end side in the longitudinal direction, has such properties that illuminating light is reflected so as to be directed to the other end side, and
a joined surface which is located on the other end side from said first joined surface comprises an optical film having such properties that illuminating light is reflected so as to be directed to the other end side and light in a wavelength band which is different from the wavelength band to which the light belongs is transmitted.

4. An illuminator, comprising a number of light emitting elements for emitting light in different wavelength bands, **characterized in that**
the illuminator comprises an optical integrator in columnar form which allows light emitted from said number of light emitting elements to enter, reflects the light inside so that illumination becomes uniform and emits the light,
said optical integrator is formed of a number of block materials having light transmitting properties joined in a longitudinal direction,
the joined surfaces of said number of block materials are inclined relative to the longitudinal direction,
light emitted from at least one light emitting element from among said number of light emitting elements enters through a side surface of said optical integrator and illuminates the joined surfaces,
light emitted from the other light emitting elements enters through an end surface on one end side of said optical integrator in the longitudinal direction and illuminates the joined surfaces, and
said joined surfaces comprise an optical film having such properties that illuminating light from the side surface is reflected so as to be directed to the other end side in the longitudinal direction, and illuminating light from the end surface is transmitted.

5. The illuminator according to Claim 3 or 4, wherein said number of light emitting elements are placed on separate bases.

6. The illuminator according to Claim 3 or 4, wherein said number of light emitting elements are placed on a single base.

7. The illuminator according to any of Claims 3 to 6, further comprising a means for controlling said number of light emitting elements so that the elements emit light in sequence.

8. The illuminator according to any of Claims 3 to 6, further comprising a means for controlling said number of light emitting elements so that the elements emit light simultaneously.

9. An illuminator, comprising a light emitting element, **characterized in that**
the illuminator comprises an optical integrator in columnar form for allowing light emitted from said light emitting element to enter, reflecting the light inside so that illumination becomes uniform, and emitting the light,
said optical integrator has an inclining surface which is inclined relative to a longitudinal direction on one end side in the longitudinal direction,
light emitted from said light emitting element enters through a side surface of said optical integrator and illuminates said inclining surface, and
said inclining surface has such properties that illuminating light is reflected so as to be directed to the other end side in the longitudinal direction.

10. The illuminator according to any of Claims 3 to 9, wherein
the illuminator comprises an optical member for transmitting or reflecting light emitted from said light emitting element, and
said optical member has such properties as to change the spread angle of light emitted from said light emitting element.

11. A projection type image display, **characterized by** comprising:
the illuminator according to any of Claims 3 to 10;
a spatial light modulator for converting light emitted from the optical integrator in the illuminator to modulated light for an image; and
a projection lens for projecting the modulated light converted by the spatial light modulator onto an object on which an image is to be projected.

12. The projection type image display according to Claim 11, further comprising a separation and synthesis means for separating light emitted from the light emitting element in said illuminator into a first polarization component in a first direction and a second polarization component which is perpendicular to the first direction, converting the first polarization component to a second polarization component and synthesizing the two polarization components.
